Europäisches Patentamt

(19) European Patent Office

Office européen des brevets

(11) Publication number: 0 312 664
A1

## (12) EUROPEAN PATENT APPLICATION

(21) Application number: 87402376.5

(22) Date of filing: 22.10.87

(51) Int. Cl.⁴: C08L 23/12 , C08L 23/08 , C08L 23/16 , //(C08L23/12, 23:08,23:16)

(43) Date of publication of application:
26.04.89 Bulletin 89/17

(84) Designated Contracting States:
ES FR IT NL SE

(71) Applicant: Société Anonyme dite: NORSOLOR
Tour Aurore, Place des Reflets
F-92080 Paris la Défense 2, Cedex 5(FR)

(72) Inventor: Mitsuno, Tatsuyuki
1-9, Yushudainishi
Ichihara-shi Chiba(JP)
Inventor: Shinonaga, Hideo
285-172, Higashiterayama-cho
Chiba-shi Chiba(JP)
Inventor: Daimon, Akio
1-9, Yushudainishi
Ichihara-shi Chiba(JP)

(74) Representative: Dubost, Thierry
c/o NORSOLOR Service Propriété
Industrielle B.P. 57
F-62670 Mazingarbe(FR)

(54) Impact-resistant thermoplastic composition having improved surface properties.

(57) This composition comprises (A) from 20 to 80 % by weight of a polypropylene resin, (B) from 5 to 38 % by weight of an ethylene copolymer having from 82 to 98.7 mol % of an ethylene unit, from 1 to 15 mol % of an ester unit selected from alkyl acrylate and methacrylate having an alkyl group of 1 to 8 carbon atoms and from 0.3 to 3 mol % of an unsaturated dicarboxylic acid anhydride unit and (C) from 5 to 70 % by weight of ethylene-propylene and/or ethylene-propylene-non-conjugated diene copolymer rubber containing from 50 to 85 mol % of an ethylene unit and have a Mooney viscosity at 100° C of 20 to 100 and an iodine value of 20 or less, the sum (A) + (B) + (C) being equal to 100 parts by weight.

Molded products comprising such a composition exhibit improved adhesiveness, paintability and printability.

EP 0 312 664 A1

# IMPACT-RESISTANT THERMOPLASTIC COMPOSITION HAVING IMPROVED SURFACE PROPER. TIES.

This invention relates to an impact-resistant thermoplastic composition having improved surface properties.

Thermoplastic elastomers are known materials and recently their uses are being steadily increased including parts of automobiles, household appliances, etc. because of their low hardness and flexible properties and their moldability by the methods such as extrusion molding, injection molding, etc. like the conventional thermoplastic resins.

Especially, olefinic thermoplastic elastomers have low specific gravity, heat resistance and superior balance in properties in addition to the above properties and hence are increasely required especially in the field of automobile parts also due to the trend of lightening of automobiles. Recently, they have been found to have uses also in the field of injection molding of large articles such as bumpers of automobiles. Further there is a trend to improve fashionability by painting the surface of bumpers in the same colors as the bodies.

Furthermore, printing is often made on household appliances to increase decorative effects.

This invention relates to a thermoplastic composition capable of providing molded products improved in surface properties such as adhesiveness, paintability and printability together with impact resistance and heat resistance and contemplates use for parts of automobiles and household appliances as mentioned above.

Hitherto, compositions comprising olefinic copolymer rubbers or olefinic plastics have been well known as olefinic thermoplastic elastomers. However, owing to their non-polarity, in many cases, surface treatment for improvement of adhesion, paintability, etc. is difficult.

In order to solve these problems, a medium called "primer", typi cal composition of which comprises halogenated polypropylene and toluene,is used as a layer between olefinic thermoplastic elastomer and adhesives and paint to further improve the compatibility therebetween. However, due to expensiveness of the primer per se and due to the addition of one extra step, the cost of final products increases and thus further improvement has been required.

For improvement of adhesion, modification of the surface of polypropylene molded products by physical or chemical etching has been studied and used. However, this method is more complex than the primer coating step and further modification of the molded products may be caused depending on the etching conditions and improvement is unsufficient.

For improvement of paintability, there was used a method of imparting polarity to the surface of molded products by irradiation with plasma in place of coating with primer. However, this method has not yet provided satisfactory results since the plasma irradiation step is carried out in a batch system and treatment becomes ununiform for molded products of complicated shapes.

Accordingly, one object of this invention is to provide a thermoplastic composition free of the above defects and remarkably superior in adhesion, paintability and printability. Another object of this invention is to provide a molded product excellent in surface workability and mechanical characteristics by means of said thermoplastic composition.

As a result of the inventors'intensive researches to attain the above objects, it has been found that a composition comprising a polypropylene resin, an ethylene copolymer comprising an ethylene unit, an ester unit selected from an alkyl acrylate and an ·alkyl methacrylate and an unsaturated dicarboxylic acid anhydride unit and an ethylene-propylene or ethylene-propylene-non-conjugated diene copolymer rubber is free from the above defects and is excellent in adhesion and paintability.

Therefore the present invention relates to a thermoplastic composition comprising :

(A) from 20 to 80 parts by weight of a polypropylene resin,

(B) from 5 to 38 parts by weight of an ethylene copolymer having from 82 to 98.7 mol % of an ethylene repeating unit, from 1 to 15 mol % of an ester repeating unit selected from an alkyl acrylate and alkyl methacrylate having an alkyl group of 1 to 8 carbon atoms and from 0.3 to 3 mol % of an unsaturated dicarboxylic acid anhydride repeating unit and

(C) from 5 to 70 parts by weight of an ethylene-propylene and/or ethylene-propylene-non-conjugated diene copolymer rubber containing from 50 to 85 mol % of an ethylene unit and having a Mooney viscosity $(ML_{1+4} \ 100^{\circ} \ C)$ of 20 to 100 and an iodine value of 20 or less,

the sum (A) + (B) + (C) being equal to 100 parts by weight.

As the polypropylene resin (A) may be used crystalline polypropylene, crystalline polypropylene-ethylene block or random copolymers, crystalline polypropylene- -olefin copolymers (the -olefin having from 4 to 10 carbon atoms), etc. For some applications, a proportion of 20 to 60 parts by weight of the said polypropylene resin in the composition may be preferred in order to obtain a thermoplastic elastomer composition. Melt index (according to ASTM D 1238) of said polypropylene resin (A) is generally in the range of 0.5 to 100, preferably 1 to 20 g/10 min.

As examples of monomers for the ester repeating unit of the copolymer (B) may be mentioned methyl acrylate, ethyl acrylate, n-butyl acrylate, iso-butyl acrylate, methyl methacrylate, ethyl methacrylate, 2-ethylhexyl methacrylate, butyl methacrylate, etc. (called "unsaturated ester compounds" hereinafter).

As examples of unsaturated dicarboxylic acid anhydride in the copolymer (B) may be made mentioned maleic anhydride, citraconic anhydride, itaconic anhydride, tetrahydrophtalic anhydride, etc. Especially preferred is maleic anhydride.

Amount of the unsaturated dicarboxylic acid anhydride in the ethylene copolymer (B) is preferably in the range of 1 to 3 mol %. If less than 0.3 mol %, polar groups which participate in the surface processing are deficient, giving unsufficient improvement of properties.

Method for production of the same ethylene copolymer (B) has no special limitation and include known methods such as high-pressure bulk polymerization where ethylene is copolymerized in the presence of a free-radical initiator under a pressure of 500 to 3,000 bars and at a temperature of 100 to 300°C in the presence or absence of a suitable solvent or chain transfer agent. Such high-pressure polymerization method has been described namely in British Patent No. 2,091,745, as well as United States Patent No. 4,617,366 and United States Patent No. 4,644,044.

Melt index (according to ASTM D 1238) of the ethylene copolymer is suitably in the range of 1 to 500, preferably 3 to 200 dg/min.

As the non-conjugated dienes of copolymer (C) mention may be made of, for example, methyltetrahydroindene, 5-vinylnorbornene, 5-ethylidene-2-norbornene, dicyclopentadiene, 1,4-hexadiene, 1,6-octadiene, etc.

The copolymer (C) is an amorphous copolymer generally having a density between 0.850 and 0.865.

The ethylene-propylene and/or ethylene-propylene-non-conjugated diene copolymer rubber (C) may be partially crosslinked with an organic peroxide.

Said organic peroxides include 2,5-dimethyl 2,5-(t-butyl peroxy)-hexane, 2,5-dimethyl 2,5-di(t-butylperoxy)hexyne-3, 1,3-bis(t-butylperoxyisopropyl)benzene, 1,1-di(t-butylperoxy)3,5,5-tri-methylcyclohexane, 2,5-dimethyl 2,5-di(peroxybenzoyl)-hexyne-3 and dicumyl peroxide, etc.

If necessary, crosslinking aids such as bismaleimide compounds, divinyl benzene, etc. may further be added to the organic peroxide.

For 100 parts by weight of the thermoplastic composition of the invention, the amount of the ethylene copolymer (B) is preferably from 15 to 30 parts by weight, and the amount of the ethylene-propylene and/or ethylene-propylene-non-conjugated diene copolymer rubber (C) is preferably from 25 to 55 parts by weight.

The thermoplastic composition of the invention may additionally comprise, provided that they do not substantially alter the characteristics thereof, various styrene elastomers such as styrene-butadiene random copolymer, styrene-butadiene block copolymer and its hydrogenated derivative, and various functional group-containing polyolefins such as maleic anhydride graft modified polypropylene, glycidyl group-containing olefin polymer, etc.

Furthermore, if necessary, there may also be added process oils such as paraffinic oils, aromatic oils, naphtenic oils, etc. for improvement of softening property, extendability and processability of the rubbers.

Moreover, various additives such as antioxidant, weathering agent, antistatic agent, foaming agent, colorant, etc. may also be added in a suitable amount.

The composition of this invention is obtained by uniformly mixing the above components in predetermined mixing ratios. Uniform mixing can be carried out by mechanical melt kneading with common kneaders for thermoplastic resins. The kneaders used include single-screw extruder, twin-screw extruder, Banbury extruder, twin roll, etc. The mixing operation of the components may be carried out simultaneously or in several steps.

The thermoplastic compositions of this invention exhibit excellent adhesion, paintability and printability while maintaining mechanical strength, heat resistance, impact strength, gloss, surface appearance and weather resistance. They can be molded by using conventional molding machines for thermoplastic resins and by the methods used for molding thermoplastic resins such as injection molding, extrusion molding, blow molding, ca lender molding, etc.

Typical examoles of uses are enumerated below :

(1) Exterior trims of automobiles such as soft bumpers, corner bumpers, side shields, over-riders, bumper moles, side moles, etc.

(2) Interior trims of automobiles such as ceiling sheets, seat belt covers, interior mats, etc.

3

(3) Various hose parts of household appliances (washing machines, bedclothes drier).

The following non-limiting examples and comparative examples further illustrate the invention, all proportions therein being given by weight unless otherwise indicated.

In these examples, the ethylene copolymer (B) was prepared as follows:

Ethylene containing a small amount of propane as a chain transfer agent and a solution of maleic anhydride in various unsaturated ester compounds shown in Table I are continuously fed under pressure to a 1.2 reactor equipped with a stirrer. Copolymerization was carried out under a pressure of 1,600 kg/cm$^2$, at a rate of 1.5 to 3.2 kg/hr and at a temperature of 180°C to obtain the ethylene copolymer.

TABLE I

| Samples | Content of comonomer (mol %) | | | Melt Index g/10 min 190°C |
|---|---|---|---|---|
| | Maleic anhydride | Unsaturated ester compound | | |
| a | 1.22 | n-butyl acrylate | 5.34 | 150 |
| b | 1.10 | 2-ethylhexyl methacrylate | 2.81 | 5 |
| c | 2.21 | ethyl acrylate | 7.52 | 41 |
| d | 1.95 | methyl methacrylate | 14.4 | 24 |

Evaluation of physical properties of the resin compositions were made in accordance with the following test methods :

A plate of 150 mm x 90 mm x 2 mm was made by molding by screw in-line type injection molding machine (99 g) manufactured by Nissei Jushi Kogyo Co. and was used as a test piece for the following measurements.

1) Initial adhesion degree of coating :

the plate as prepared hereinabove was cleaned with 1,1,1-trichloroethane vapor (74°C) for 30 seconds, dried at room temperature and thereafter directly spray coated with an urethane paint (Flexthane #101 manufactured by Nippon Bee Chemical Co.) and baked in an oven of 120°C for 30 minutes.

The formed film was cut lengthwise and crosswise by a razor to form one hundred squares (10 x 10) of 2 mm x 2 mm and thereon an adhesive tape (Cellotape manufactured by Nichiban Co.) of 24 mm wide was applied under pressure by fingers. Then, the tape was rapidly peeled off by taking one end of the tape and the number of the squares left on the plate was counted in order to determine the retention percent.

2) Adhesion strength:

(i) Method No. 1:

The same specimen as used in 1) above was coated with about 150 g/m$^2$ of an adhesive comprising 97 % by weight of G 250 (produced by CEMEDINE Co.Ltd.) and 3 % by weight of Desmodur (produced by BAYER AG) with an air-spray gun, followed by heating at 80°C for 2 minutes. A skin material (PPX, produced by TORAY Industries Inc.) was heated at 110°C fr 2 minutes and, immediately thereafter, adhered to the adhesivecoated test plate under a planer pressure of 0.2 kg/cm$^2$. After the laminate was allowed to stand at 23°C and 65 % relative humidity for 7 days, peel test was conducted to measure a peel strength.

(ii) Method No. 2:

Using the above screw in-line type injection molding machine of Nissei Jushi Kogyo Co., a sample was made by inserting a metal plate of 2 mm thick into a mold of 4 mm thick at a molding temperature of 220°C and under an injection pressure of 650 kg/cm2 and this sample was used for test. The adhesion strength was 180° peeling strength measured at 23°C and at a speed of 50 mm/min.

3) Hardness (Shore A):

measured at 23°C according to ASTM D 2240.

4) notched Izod impact strength :

measured at -40°C according to ASTM D 256.

Example 1

A mixture of Noblen® AW564 (an ethylene-propylene block copolymer produced by Sumitomo Chemical Co. Ltd., having a melt index of 8 g/10 min. and an ethylene content of 6 %) as a polypropylene resin, the ethylene copolymer (C) (as shown in Table 1) and an ethylene-propylene rubber (called EPR-1) having a Mooney viscosity of 90 at 100°C and an ethylene content of 69 weight% in the proportions as shown in Table 2 and further 0.05 part by weight (based on 100 parts by weight of said mixture) of Irganox® 1010 (manufactured by Ciba Geigy Co.) were melt kneaded in a Banbury mixer at 180°C for 5 minutes. The physical properties of the resulting composition are shown in Table 2 below.

Example 2

A mixture of Noblen® AW 564 and an ethylene-propylene copolymer rubber (called EPDM-1) having a Mooney viscosity of 86 at 100°C, an ethylene content of 50 weight% and an-iodine value of 10 in the proportions as shown in Table 2 and 0.4 part by weight (based on 100 parts by weight of said mixture) of 1,3-bis(t-butylperoxyisopropyl)benzene as a crosslinking agent were melt kneaded in a Banbury mixer at 180°C for 5 minutes. To the resulting elastomer composition was further added the ethylene copolymer (c) in the proportion as shown in Table 2 and they were again kneaded in a Banbury mixer. The resulting final elastomer composition was subjected to the evaluation tests.

Examples 3-6 and Comparative Examples 1-4

Examples 1 and 2 were repeated except that kinds and amounts of ethylene copolymer were changed as shown in Table 2 and the resulting elastomer compositions were subjected to the evaluation tests. Results of Examples 1-6 and Comparative Examples 1-4 are shown in Table 2.

Table 2

| | Polypropylene resins | | Ethylene copolymers | | Ethylene-propylene copolymer rubbers | | Initial adhesion degree of coating (%) | Adhesion strength -1 (g/inch) | Adhesion strength -2 (g/inch) (SUS/Aℓ) | Hardness (Shore A) | Izod impact strength (-40°C) (kg-cm/cm) |
|---|---|---|---|---|---|---|---|---|---|---|---|
| | Samples | wt% | Samples | wt% | Samples | wt% | | | | | |
| Example 1 | AW564 | 30 | c | 25 | EPR-1 | 45 | 100 | 2800 | 1700/1600 | 85 | NB |
| Example 2 | AW564 | 25 | c | 25 | EPDM-1 | 50 | 100 | 3000 | 1200/1800 | 78 | NB |
| Example 3 | AW564 | 25 | d | 25 | EPDM-1 | 50 | 100 | 2600 | 1300/1500 | 80 | NB |
| Example 4 | AW564 | 25 | a | 25 | EPR-1 | 50 | 100 | 2300 | 1000/1200 | 73 | NB |
| Example 5 | AW564 | 25 | b | 25 | EPR-1 | 50 | 100 | 2100 | 900/1200 | 76 | NB |
| Example 6 | AW564 | 50 | c | 20 | EPR-1 | 30 | 100 | 2000 | 500/600 | 92 | NB |
| Comparative example 1 | AW564 | 100 | | | | | 0 | 1000 | 0/0 | 99 | 3 |
| Comparative example 2 | AW564 | 50 | | | EPR-1 | 50 | 0 | 1200 | 0/0 | 93 | NB |
| Comparative example 3 | AW564 | 50 | c | 3 | EPR-1 | 47 | 10 | 1200 | 0/0 | 92 | NB |
| Comparative example 4 | AW564 | 25 | c | 50 | EPR-1 | 25 | 100 | 2800 | 1500/1600 | 69 | 5 |

**Claims**

1. A thermoplastic composition comprising :
(A) from 20 to 80 parts by weight of a polypropylene resin,
(B) from 5 to 38 parts by weight of an ethylene copolymer having from 82 to 98.7 mol % of an ethylene repeating unit, from 1 to 15 mol % of an ester repeating unit selected from an alkyl acrylate and alkyl methacrylate having an alkyl group of 1 to 8 carbon atoms and from 0.3 to 3 mol % of an unsaturated dicarboxylic acid anhydride repeating unit and
(C) from 5 to 70 parts by weight of an ethylene-propylene and/or ethylene-propylene-non-conjugated diene copolymer rubber containing from 50 to 85 mol % of an ethylene unit and having a Mooney viscosity $(ML_{1+4} \ 100^\circ C)$ of 20 to 100 and an iodine value of 20 or less, the sum (A) + (B) + (C) being equal to 100 parts by weight.

2. A thermoplastic composition according to claim 1, characterized in that the polypropylene resin (A) is selected from crystalline polypropylene, crystalline propylene-ethylene block and random copolymers and crystalline propylene-alpha-olefin copolymers.

3. A thermoplastic composition according to claim 1, characterized in that the polypropylene resin (A) has a melt index in the range of 0.5 to 100 g/10 min.

4. A thermoplastic composition according to claim 1, characterized in that the ester unit contained in the ethylene copolymer (B) is selected from methyl acrylate, ethyl acrylate, n-butyl acrylate, isobutyl acrylate, methyl methacrylate, ethyl methacrylate.

5. A thermoplastic composition according to claim 1, characterized in that the unsaturated dicarboxylic acid anhydride in copolymer (B) is maleic anhydride.

6. A thermoplastic composition according to claim 1, characterized in that the ethylene copolymer (B) has a melt index in the range of 1 to 500 dg/min.

7. A thermoplastic composition according to claim 1, characterized in that the ethylene-propylene and/or ethylene-propylene-non-conjugated diene copolymer rubber (C) is crosslinked by means of an organic peroxide.

8. A thermoplastic composition according to claim 1, characterized in that the non-conjugated diene in the copolymer rubber (C) is selected from methyltetrahydrioindene, 5-vinyl-norbornene, 5-ethylidene-2-norbornene, dicyclopentadiene, 1,4-hexadiene and 1,6-octadiene.

9. A molded product prepared from a thermoplastic composition as defined in claim 1.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | WO-A-8 604 912 (ALECKNER et al.)<br>* Page 7, line 5 - page 15, line 7 * &<br>EP-A-221 908<br>--- | 1-3,8,9 | C 08 L 23/12<br>C 08 L 23/08<br>C 08 L 23/16 //<br>(C 08 L 23/12<br>C 08 L 23:08<br>C 08 L 23:16 ) |
| X | EP-A-0 213 720 (SUMITOMO)<br>* Abstract; column 4, line 54 - column 5, line 10 *<br>--- | 1-6,9 | |
| X | EP-A-0 184 321 (SUMITOMO)<br>* Abstract; page 9, line 12 - page 10, line 22 *<br>--- | 1-6,9 | |
| A | EP-A-0 058 980 (E.I. DU PONT DE NEMOURS)<br>* Abstract *<br>----- | 1 | |

TECHNICAL FIELDS SEARCHED (Int. Cl.4)

C 08 L

The present search report has been drawn up for all claims

| Place of search | Date of completion of the search | Examiner |
|---|---|---|
| THE HAGUE | 05-07-1988 | GOOVAERTS R.E. |